# EUROPÄISCHE PATENTANMELDUNG

(11) **EP 2 862 692 A1**
(43) Veröffentlichungstag der Anmeldung: **22.04.2015**
(21) Anmeldenummer: 14186550.1
(22) Anmeldetag: 26.09.2014
(51) Int. Cl.: B29C 47/00, B29C 65/02, B29L 24/00

(54) **Hohlkammerplatte aus Kunststoff und Verfahren zur Herstellung einer Hohlkammerplatte**

(30) Priorität: 15.10.2013 DE 102013111362
(71) Anmelder: Simona AG, 55606 Kirn (DE)
(72) Erfinder: Roos, Christoph, D-56235 Ransbach-Baumbach (DE)
(74) Vertreter: advotec.

(57) **Zusammenfassung**

Hohlkammerplatte aus Kunststoff mit einer oberen Deckschicht aus extrudierten Kunststoff und einer unteren Deckschicht aus extrudierten Kunststoff und mit einer Vielzahl von Stegen (14) zwischen den beiden Deckschichten, wobei die Stege (14) die Hohlkammern (13) der Hohlkammerplatte seitlich begrenzen, wobei an zumindest einer Deckschicht, die Stege (14) mittels durch Umformung des extrudierten Kunststoffs gebildete Stegansätze einstückig an der Innenseite der Deckschicht angeformt sind, und wobei die freien Seitenkanten der einstückig angeformten Stegansätze mit der gegenüberliegenden Deckschicht stoffschlüssig in zumindest einer Verbindungszone (11) verbunden sind.

## Beschreibung

Die Erfindung betrifft eine Hohlkammerplatte aus Kunststoff nach dem Oberbegriff des Anspruchs 1. Weiter betrifft die Erfindung ein Verfahren zur Herstellung einer solchen Hohlkammerplatte.

Die gattungsgemäßen Hohlkammerplatten sind dadurch gekennzeichnet, dass sie eine obere und eine untere Deckschicht aufweisen, die durch eine Vielzahl von Stegen miteinander verbunden sind. Die Stege begrenzen dabei die Hohlkammerplatten seitlich. Je nach Anzahl und Anordnung der Stege ergeben sich unterschiedliche Bauarten. Verlaufen die Stege beispielsweise alle parallel zueinander, so sind die Hohlkammern in Längsrichtung der Platte im Wesentlichen unbegrenzt. Kreuzen sich die Stege dagegen, so werden die Hohlkammern an vier Seiten durch die Stege begrenzt und weisen beispielsweise eine rechteckige, insbesondere quadratische, Form auf.

Die gattungsgemäßen Hohlkammerplatten werden insbesondere, jedoch keineswegs ausschließlich, im Bereich des chemischen Apparatebaus verwendet. Die Hohlkammerstruktur der Hohlkammerplatten ergibt dabei eine hohe mechanische Stabilität bei relativ geringem Gewicht und relativ geringem Materialeinsatz. Zur Fertigung von Apparaten und größeren Strukturen können die Hohlkammerplatten miteinander gefügt werden, wozu sie häufig miteinander verschweißt werden.

Ein Charakteristikum der gattungsgemäßen Hohlkammerplatten ist es, dass die beiden Deckschichten aus extrudiertem Kunststoff bestehen. Denn eine Vielzahl von Kunststoffen, die für den Apparatebau von hoher Bedeutung sind, kann vielfach nur durch Extrusion in die gewünschte Plattenform gebracht werden, wohingegen beispielsweise das Spritzgießen solcher Platten aufgrund der Werkstoffeigenschaften der entsprechenden Kunststoffe nicht oder nur relativ schlecht möglich ist. Die extrudierten Kunststoffe, beispielsweise Polypropylen oder hochdichtes Polyethylen, bieten dabei im Hinblick auf die chemischen Eigenschaften besondere Vorzüge, die seit langem bewärt sind.

Ein Verfahren zur Herstellung von Hohlkammerplatten mit extrudierten Deckschichten wird in der DE 35 26 752 A1 beschrieben. Bei diesem Verfahren werden die beiden Deckschichten zunächst konventionell unter Verwendung von thermoplastischem Kunststoff extrudiert. Die Stege zur Verbindung der beiden Deckschichten werden anschließend in der gewünschten Geometrie zugeführt und die jeweilige Innenseite der beiden Deckschichten bis auf eine Temperatur erwärmt, bei der der extrudierte Kunststoff einen thermoplastischen Zustand erreicht. Danach werden die Stege mit den beiden freien Seitenkanten in den thermoplastischen Kunststoff an der Innenseite der beiden Deckschichten eingedrückt, woraufhin der Kunststoff der beiden Deckschichten anschließend zur Erstarrung gebracht wird. Auf diese Weise werden die beiden Deckschichten durch Verschweißen mit den freien Seitenkanten der Stege formschlüssig verbunden.

Nachteilig an diesem Verfahren ist es, dass die vorgefertigten Stege in einer bestimmten Geometrie zwischen die beiden an der Innenseite bis in den plastischen Zustand erwärmten Deckschichten gebracht werden müssen, was einen sehr hohen gerätetechnischen Aufwand darstellt. Außerdem lässt sich eine Vielzahl von Steggeometrien mit diesem Verfahren nicht oder nur mit einem unzulässig hohen gerätetechnischen Aufwand herstellen.

Ausgehend von diesem Stand der Technik ist es deshalb Aufgabe der vorliegenden Erfindung, eine neue Hohlkammerplatte mit Deckschichten aus extrudiertem Kunststoff vorzuschlagen, die eine frei gestaltbare Geometrie der Stege zwischen den Hohlkammerplatten ermöglicht und mit einfachen Produktionsmitteln hergestellt werden kann. Weiter ist es Aufgabe der vorliegenden Erfindung, ein Verfahren zur Herstellung einer solchen Hohlkammerplatte vorzuschlagen.

Diese Aufgaben werden durch eine Hohlkammerplatte und ein Verfahren zur Herstellung einer Hohlkammerplatte nach der Lehre der unabhängigen Hauptansprüche gelöst.

Vorteilhafte Ausführungsformen der Erfindung sind Gegenstand der Unteransprüche.

Die erfindungsgemäße Hohlkammerplatte beruht auf dem Grundgedanken, dass die Stege zwischen den beiden Deckschichten nicht mehr vorgefertigt zwischen die beiden Deckschichten zugeführt und mit den Innenseiten der beiden Deckschichten verschweißt werden. Stattdessen werden die Stege durch Umformung zumindest einer der beiden Deckschichten nach deren Herstellung durch Extrusion gebildet. Durch die Umformung der entsprechenden Deckschicht werden an deren Innenseite einstückig an die Deckschicht angeformte Stegansätze gebildet, die mit einem freien Ende über die Innenseite der Deckschicht überstehen. Die freien Enden der einstückig angeformten Stegansätze bilden dabei freie Seitenkanten. Zur Bildung der erfindungsgemäßen Hohlkammerplatte wird die umgeformte Deckschicht mit den an der Innenseite einstückig angeformten Stegansätzen dann mit der gegenüberliegenden Deckschicht stoffschlüssig verbunden, wobei die freien Seitenkanten der umgeformten Deckschicht sich in einer Verbindungszone mit der gegenüberliegenden Deckschicht verbinden. Die Verbindung der beiden Deckschichten in der Verbindungszone kann dabei beispielsweise dadurch erfolgen, dass die freien Seitenkanten der Stegansätze einerseits und/oder die Innenseite der gegenüberliegenden Deckschicht bis in den thermoplastischen Bereich erwärmt und dann miteinander kontaktiert werden, um die beiden Bauteile unter Bildung der erfindungsgemäßen Hohlkammerplatte einstückig miteinander zu verschweißen.

In einer Variante der erfindungsgemäßen Hohlkammerplatte wird zu deren Bildung nur eine der beiden Deckschichten umgeformt, so dass nur diese Deckschicht an ihrer Innenseite die einstückig angeformten Stegansätze aufweist. Die freien Seitenkanten dieser einstückig angeformten Stegansätze werden dann mit der Innenseite der gegenüberliegenden Deckschicht, die ebenfalls durch Extrusion aber ohne Umformung gebildet wurde, verbunden. Die Verbindungszone zwischen den beiden Deckschichten liegt dann im Kontaktbereich an der Innenseite der nicht verformten Deckschicht.

Alternativ zur Verformung von lediglich einer Deckschicht ist es auch möglich, dass sowohl an der oberen als auch an der unteren Deckschicht jeweils Stegansätze einstückig angeformt werden. Die beiden Deckschichten werden dann so aneinander angenähert, dass die freien Seitenkanten der gegenüberliegenden, jeweils einstückig angeformten Stegansätze miteinander in Kontakt gebracht werden und so einstückig miteinander verbunden werden können.

Soweit beide Deckschichten zur Herstellung der erfindungsgemäßen Hohlkammerplatte umgeformt werden, ist es besonders vorteilhaft, wenn die beiden dazu verwendeten Plattenhälften der Hohlkammerplatte im Wesentlichen baugleich sind. Im Ergebnis wird es dadurch ermöglicht, dass die beiden Plattenhälften mit ihren extrudierten Deckschichten und den daran einstückig angeformten Stegansätzen in einer einzigen Anlage extrudiert und umgeformt werden können. Durch geeigneten Zuschnitt der umgeformten Deckschichten ist es dann möglich, nach der Umformung sequentiell obere und untere Deckschichten herzustellen, die dann zu einer erfindungsgemäßen Hohlkammerplatte verbunden werden können.

Die Geometrie der Stege zwischen den beiden Deckschichten ist grundsätzlich beliebig. Gemäß einer bevorzugten Ausführungsform ist es vorgesehen, dass die Stege eine Kreuzverrippung mit allseitig geschlossenen Hohlkammern bilden.

Weiterhin ist es besonders vorteilhaft, wenn die von den Stegen durch die Kreuzverrippung gebildeten Hohlkammern rechteckig, insbesondere quadratisch, ausgebildet sind. Auf diese Weise lassen sich Hohlkammerplatten herstellen, deren mechanische Eigenschaften abhängig von der Hohlkammergeometrie richtungsabhängig hergestellt werden können. Weisen die Hohlkammern einen quadratischen Querschnitt auf, so ergibt sich in Längs- und Querrichtung der Hohlkammerplatten das jeweils gleiche mechanische Fertigkeitsprofil. Eine besonders hohe Stabilität ergibt sich, wenn die Hohlkammern wabenförmig ausgebildet sind. Insbesondere Wabenstrukturen mit sechseckigen Einzelwaben sind gut geeignet.

Die erfindungsgemäßen Hohlkammerplatten erlauben es aufgrund der einstückigen Anformung der Stegansätze letztendlich, beliebig dicke Deckschichten bzw. beliebig dicke Stege herzustellen. Gemäß einer bevorzugten Variante ist es jedoch vorgesehen, dass die Deckschichten eine Wandstärke von größer oder gleich 5 mm, insbesondere eine Plattenstärke von 6 mm, 8 mm oder 10 mm, aufweisen. Solche Deckschichten mit der entsprechenden Wandstärke lassen sich durch Extrusion und anschließende Umformung problemlos herstellen und sind insbesondere im chemischen Apparatebau vielfach unbedingt notwendig.

Im Hinblick auf die Wandstärke der Stege bieten die erfindungsgemäßen Hohlkammerplatten den Vorteil, dass die Wandstärke der Stege unabhängig von der Wandstärke der Deckschichten gewählt werden kann. Dies unterscheidet die Hohlkammerplatten insbesondere von Hohlkammerplatten, die durch spritzgußtechnische Verfahren hergestellt werden, da bei diesen Verfahren die Wandstärke der Stege stark von der Wandstärke der Deckschichten abhängt. Insbesondere ist es vorteilhaft, wenn die Wandstärke der Stege kleiner oder sehr viel kleiner als die Wandstärke zumindest einer Deckschicht ist, da derartige Hohlkammerplatten mit starken Wandstärkeunterschieden zwischen den Stegen einerseits und den Deckschichten andererseits mit anderen Verfahren nicht oder nur schlecht hergestellt werden können.

Die Wandstärke der Stege kann auf die jeweilige Wandstärke der Hohlkammerplatte und die mechanischen Anforderungen abgestimmt werden. Gemäß einer bevorzugten Ausführungsform ist es vorgesehen, dass die Stege eine Wandstärke von kleiner 10 mm, insbesondere eine Wandstärke von 8mm, 6mm, 4 mm, 2 mm oder 1 mm, aufweisen. Im Ergebnis ist es somit beispielsweise möglich, Hohlkammerplatten herzustellen, deren Deckschicht eine Wandstärke von 10 mm aufweist, wohingegen die Stege eine Wandstärke von lediglich 2 mm oder 1 mm aufweisen. Auf diese Weise können hochfeste Hohlkammerplatten mit relativ geringem Gewicht und relativ geringem Materialeinsatz hergestellt werden.

Welches Kunststoffmaterial zur Herstellung der erfindungsgemäßen Hohlkammerplatten eingesetzt wird, ist grundsätzlich beliebig, solange sich dieses Material zur Herstellung der Deckschichten extrudieren und anschließend zur Herstellung der Stegansätze umformen lässt. Besonders geeignet sind die erfindungsgemäßen Hohlkammerplatten für Kunststoffmaterialien, bei denen es sich um extrudierbaren Thermoplast handelt, wobei die Schmelze-Massenfließrate des Thermoplasts im Bereich zwischen 0,20 g/10min bis 0,80 g/10min liegt. Denn solche hochviskosen Thermoplaste lassen sich in anderer Weise, beispielweise durch Spritzgießen, nicht oder nur sehr schlecht verarbeiten, so dass Hohlkammerplatten aus solchen Materialien bisher nur sehr aufwendig herstellbar sind.

Denkbar zur Herstellung der erfindungsgemäßen Hohlkammerplatten sind insbesondere die Thermoplaste PP-C, PETG, PVC, E-CTFE und PVDF. Besonders vorteilhaft ist es, wenn die Deckschichten der erfindungsgemäßen Hohlkammerplatten aus extrudierten, hochdichten Polyethylen, insbesondere PE-HD gemäß der DIN 16925, oder aus extrudierten Polypropylen, insbesondere Polypropylen-Homopolymer gemäß DIN 16971, hergestellt sind. Bei diesen Materialien handelt es sich um sehr gut schweißbare Thermoplaste, die im Apparatebau aufgrund ihrer Materialeigenschaften gerne verwendet werden. Hohlkammerplatten aus diesem Material konnten aber aufgrund der Materialeigenschaften des Polypropylens bzw. des hochdichten Polyethylens nur sehr aufwendig bzw. gar nicht hergestellt werden.

Das erfindungsgemäße Verfahren zur Herstellung der erfindungsgemäßen Hohlkammerplatte wird durch die Teilschritte Extrusion, Umformung und stoffschlüssige Verbindung, insbesondere Verschweißung, charakterisiert. Dies bedeutet mit anderen Worten, dass bei dem erfindungsgemäßen Verfahren zunächst die obere Deckschicht und die untere Deckschicht durch Extrusion eines thermoplastischen Kunststoffs hergestellt werden. Die beiden Deckschichten können dabei auch auf einer einzigen Extrusionsanlage gefertigt werden, wobei die beiden Deckschichten dann durch entsprechende Zuschnitte voneinander getrennt werden.

Anschließend wird zumindest eine der beiden Deckschichten aus extrudiertem Kunststoff an der Innenseite umgeformt, um auf der Innenseite einstückig angeformte Stegansätze zu bilden. Die an der Innenseite der Deckschicht überstehenden Stegansätze bestehen also aus dem gleichen extrudierten Kunststoff wie die Deckschicht selbst und werden durch Verdrängung dieses Kunststoffs aus der Deckschicht während des Umformprozesses gebildet.

Zuletzt wird die Hohlkammerplatte selbst durch stoffschlüssige Verbindung der freien Seitenkanten der einstückig angeformten Stegansätze an der gegenüberliegenden Deckschicht hergestellt, wobei sich in der Verbindungszone zwischen den freien Seitenkanten der Stegansätze und der gegenüberliegenden Deckschicht eine stoffschlüssige Verbindungszone ausbildet.

Gemäß einer bevorzugten Verfahrensvariante ist es vorgesehen, dass nicht nur eine der beiden Deckschichten, sondern beide Deckschichten unter Bildung von Stegansätzen umgeformt werden. Anschließend werden die beiden Deckschichten dann mit ihren einander formkomplementär gegenüberliegenden Stegansätzen so miteinander in Kontakt gebracht, dass die freien Seitenkanten der gegenüberliegenden Stegansätze einander berühren und aufgrund ihres thermoplastischen Zustands eine einstückige Verbindung miteinander eingehen.

Hinsichtlich der Herstellung der einstückig angeformten Stegansätze durch Umformung ist es besonders vorteilhaft, wenn die extrudierten Deckschichten beim Umformen einen besonderen Temperaturverlauf aufweisen. Dieser besondere Temperaturverlauf ist dadurch gekennzeichnet, dass die Innenseite der Deckschicht, an der die Stegansätze durch Umformung gebildet werden sollen, eine Temperatur oberhalb der zur Umformung des extrudierten Kunststoffs notwendigen Erweichungstemperatur aufweist, um ein Fließen des Kunststoffs während des Umformprozesses bei relativ geringen Presskräften zu ermöglichen. An der Außenseite der Deckschicht, die nach Abschluss des erfindungsgemäßen Verfahrens auch die Außenseite der erfindungsgemäßen Hohlkammerplatte bildet, soll dagegen eine Temperatur unterhalb der zur Umformung des extrudierten Kunststoffs notwendigen Erweichungstemperatur erhalten bleiben. Dazu kann die Außenseite der Deckschicht beispielsweise eine Temperatur in der Nähe von der Raumtemperatur aufweisen. Dadurch, dass die umzuformende Deckschicht an ihrer Außenseite eine Temperatur unterhalb der Erweichungstemperatur aufweist, ist gewährleistet, dass es an der Außenseite der Deckschicht nicht zur unerwünschten Verformung während des Umformprozesses kommt. Im Ergebnis kann also an der Außenseite der Deckschicht, die später auch die Außenseite der Hohlkammerplatte bildet, ein unerwünschtes Verformen, beispielsweise das Einfallen des Materials zwischen den Stegen, verhindert werden.

Die Abmaße der extrudierten Deckschichten kann größer als die spätere Hohlkammerplatte sein. Dann müssen die Deckschichten allerdings am Rand beschnitten werden, was zu Verschnittmaterial führt. Um den Aufwand zu reduzieren, ist es deshalb besonders vorteilhaft, wenn die extrudierten Deckschichten vor der Umformung zu Plattenabschnitten zugeschnitten werden. Die Breite der extrudierten Deckschichten sollte dabei der Breite der Seitenkanten der herzustellenden Hohlkammerplatten entsprechen. Die Länge der Seitenkanten der Plattenabschnitte dagegen sollte der Länge der Seitenkanten der herzustellenden Hohlkammerplatten entsprechen.

Welche Werkzeuge zur Umformung der extrudierten Deckschichten eingesetzt werden, ist grundsätzlich beliebig. Besonders einfach und kostengünstig lassen sich die erfindungsgemäßen Hohlkammerplatten mittels Presswerkzeugen herstellen, deren Presselement die Kontur der zu bildenden Stegansätze enthält. Durch Aufpressen des Presselements mit der darin enthaltenen Kontur der zu bildenden Stegansätze in die erwärmte Innenseite der Deckschichten lässt sich die gewünschte Kontur der Stegansätze problemlos durch Umformung herstellen.

Durch Einsatz einer Plattenpresse können die erfindungsgemäßen Hohlkammerplatten im Hinblick auf den Umformprozess besonders einfach realisiert werden.

Alternativ zur Verwendung einer Plattenpresse, bei der die Deckschichten sequentiell umgeformt werden, kann auch eine Doppelbandpresse eingesetzt werden, um die für das erfindungsgemäße Verfahren notwendige Umformung der extrudierten Deckschichten zu realisieren.

Auch der Einsatz eines Twinsheet-Thermoformprozesses zur Herstellung der Hohlkammerplatten ist denkbar. Im Unterschied zum Press- oder Kalandrierverfahren kann dabei der komplette Werkstoff in die Schmelze gebracht werden, um an einer Platte die Stege anzuformen. Umformen und Fügen erfolgen simultan in einem Arbeitsschritt. Der so erzeugte Kern kann dann wiederum beispielsweise auf einer abgedeckten Doppelbandpresse mit Deckschichten versehen werden.

Gemäß einer weiteren Variante ist es vorgesehen, dass die extrudierten Deckschichten zur Bildung der Stegansätze mit einem Kalandrierwerkzeug, das die Kontur der Stegansätze enthält, kalandriert werden. Wiederum ist dadurch ein im Durchlauf kontinuierlich durchführbares Herstellverfahren realisierbar.

Eine Ausführungsform der Erfindung ist in den Zeichnungen schematisch dargestellt und wird nachfolgend beispielhaft erläutert.

Es zeigt:
- Fig. 1: den Verfahrensschritt zur Extrusion der Deckschichten der erfindungsgemäßen Hohlkammerplatte im schematisierten Querschnitt;
- Fig. 2: das Ablängen der extrudierten Deckschicht entsprechend der vorgegebenen Plattenmaße der erfindungsgemäßen Hohlkammerplatte im schematisierten Querschnitt;
- Fig. 3: die Umformung der abgelenkten Deckschichten in einem Presswerkzeug in einem schematisierten Querschnitt;
- Fig. 4: die umgeformte Deckschicht mit den einstückig angeformten Stegansätzen nach der Entformung aus dem Presswerkzeug;
- Fig. 5: das Fügen der erfindungsgemäßen Hohlkammerplatte durch Verbinden von zwei Abschnitten der umgeformten Deckschicht;
- Fig. 6: die erfindungsgemäße Hohlkammerplatte im schematisierten Querschnitt;
- Fig. 7: die erfindungsgemäße Hohlkammerplatte in schematisierter Ansicht von oben.

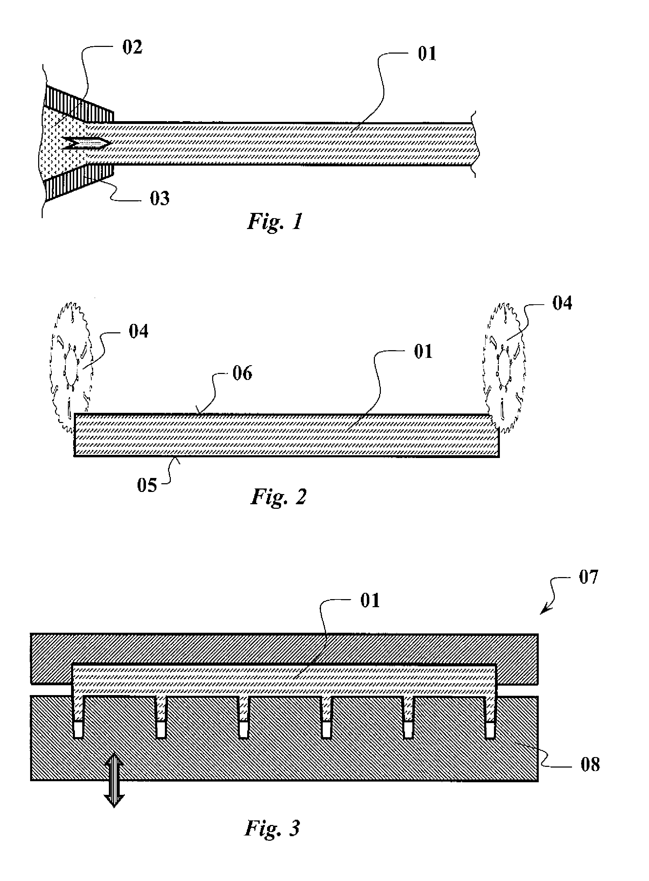

Die Darstellungen in Fig. 1 bis Fig. 7 sind rein schematisch und dienen lediglich zur Erläuterung der Erfindung. Alle nicht zum Verständnis der Erfindung erforderlichen Bestandteile der bei der Herstellung notwendigen Vorrichtungen und Apparaturen sind in Fig. 1 bis Fig. 7 nicht dargestellt, dem Fachmann aber ohne Weiteres bekannt.

Wie in Fig. 1 dargestellt, wird im ersten Verfahrensschritt zunächst eine plattenförmige Deckschicht 01 durch Extrusion von thermoplastischem Kunststoff 02 mittels einer Extrusionsdüse 03 hergestellt.

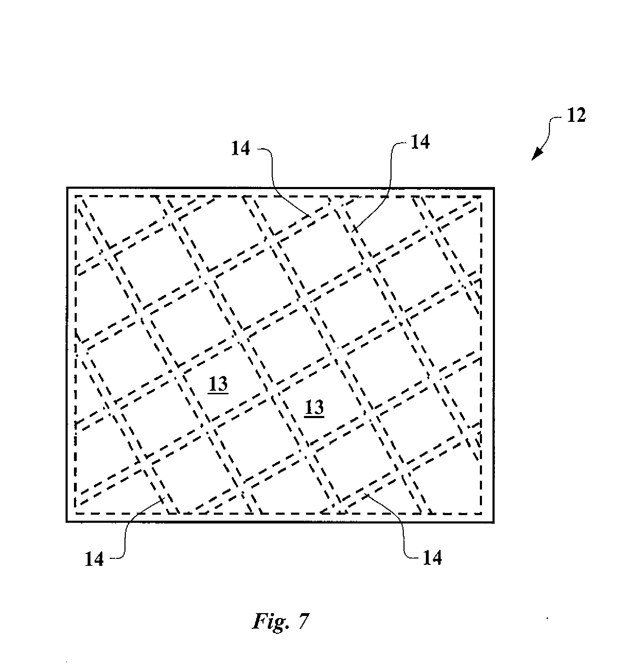

Wie in Fig. 2 dargestellt, wird die Deckschicht 01 anschließend mittels Schneidwerkzeuge 04 zu plattenförmigen Abschnitten abgelenkt. Die Abmaße entsprechen dabei den Abmaßen der herzustellenden Hohlkammerplatte (siehe Fig. 7). Anschließend wird die Deckschicht 01 auf ihrer Innenseite 05 bis auf eine Temperatur erwärmt, die oberhalb der Erweichungstemperatur liegt. Die Außenseite 06 wird dagegen nicht erwärmt und bleibt unterhalb der Erweichungstemperatur. Die an ihrer Innenseite 05 erwärmte Deckschicht 01 aus extrudiertem Kunststoff wird anschließend in eine Plattenpresse 07 eingelegt und die Plattenpresse 07 mit Druck beaufschlagt. Durch das Pressen der Deckschicht 01 fließt das an der Innenseite 05 über der Erweichungstemperatur erwärmte thermoplastische Material in die Kontur des Presselements 08.

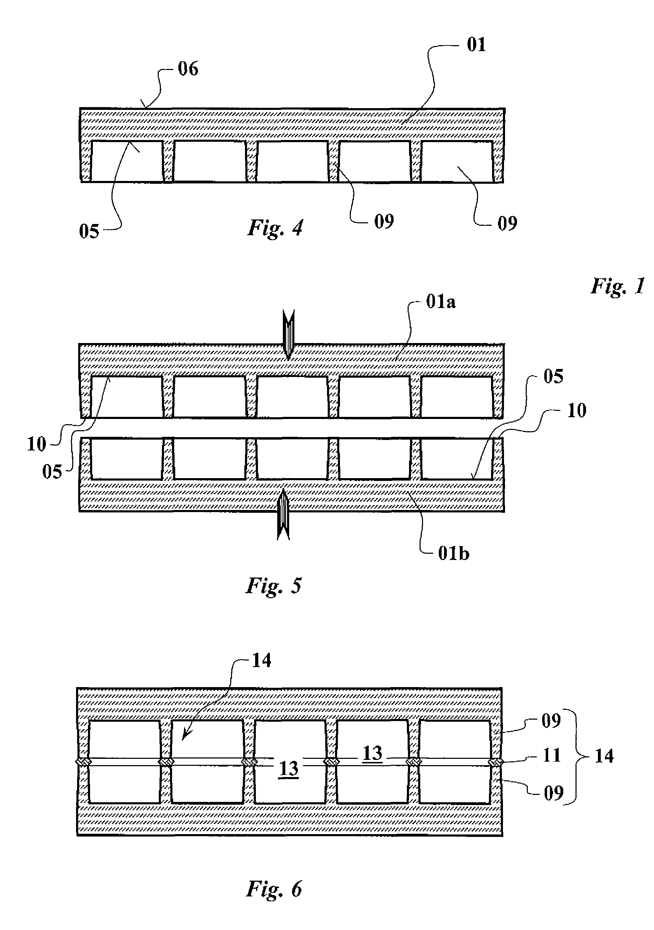

Fig. 4 zeigt die Deckschicht 01 nach der Entformung aus der Plattenpresse 07. An der Innenseite 05 wurden durch die Umformung in der Plattenpresse 07 einstückig angeformte Stegansätze 09 gebildet, die kreuzrippenförmig angeordnet sind.

Im nächsten Verfahrensschritt werden die freien Seitenkanten 10 von zwei bereits umgeformten Deckschichten 01 bis auf eine Temperatur oberhalb der Erweichungstemperatur erwärmt und anschließend die beiden Deckschichten 01a und 01b einander gegenüberliegend angeordnet. Dann werden die beiden Deckschichten 01a und 01b, wie in Fig. 6 dargestellt, gegeneinander gepresst, so dass die freien Seitenkanten 10 der beiden Deckschichten 01a und 01b in Verbindungszonen 11 miteinander stoffschlüssig verschweißen. Im Ergebnis wird dadurch eine Hohlkammerplatte 12 gebildet, deren Hohlkammern 13 von den Stegen 14 allseitig begrenzt sind. Jeder Steg 14 besteht dabei aus zwei Stegansätzen 09, die jeweils einstückig an die jeweils zugeordnete Deckschicht 01a bzw. 01b angeformt sind und die in der Verbindungszone 11 stoffschlüssig miteinander verschweißt sind.

Fig. 7 zeigt die Hohlkammerplatte 12 mit den strichliniert angedeuteten Stegen 14 in Ansicht von oben. Die Stege 14 ergänzen dabei jeweils eine quadratische Hohlkammer 13.

## Patentansprüche

1. Hohlkammerplatte (12) aus Kunststoff mit einer oberen Deckschicht (01a) aus extrudierten Kunststoff und einer unteren Deckschicht (01b) aus extrudierten Kunststoff und mit einer Vielzahl von Stegen (14) zwischen den beiden Deckschichten (01a, 01b), wobei die Stege (14) die Hohlkammern (13) der Hohlkammerplatte (12) seitlich begrenzen,
**dadurch gekennzeichnet,**
**dass** an zumindest einer Deckschicht (01a, 01b) die Stege (14) mittels durch Umformung des extrudierten Kunststoffs gebildete Stegansätze (09) einstückig an der Innenseite (05) der Deckschicht (01a, 01b) angeformt sind, und wobei die freien Seitenkanten (10) der einstückig angeformten Stegansätze (09) mit der gegenüberliegenden Deckschicht (01a, 01b) stoffschlüssig in zumindest einer Verbindungszone (11) verbunden sind.

2. Hohlkammerplatte nach Anspruch 1,
**dadurch gekennzeichnet,**
**dass** die freien Seitenkanten (10) der einstückig angeformten Stegansätze (09) ohne Zugabe von Zusatzwerkstoff mit der gegenüberliegenden Deckschicht (01) verschweißt sind.

3. Hohlkammerplatte nach Anspruch 1 oder 2,
**dadurch gekennzeichnet,**
**dass** an nur einer Deckschicht die Stegansätze einstückig angeformt sind und die freien Seitenkanten der einstückig angeformten Stegansätze mit der Innenseite der gegenüberliegenden Deckschicht verbunden sind.

4. Hohlkammerplatte nach Anspruch 1 oder 2,
**dadurch gekennzeichnet,**
**dass** an der oberen und der unteren Deckschicht (01a, 01b) jeweils Stegansätze (09) einstückig angeformt sind, wobei die freien Seitenkanten (10) der gegenüberliegenden, jeweils einstückig angeformten Stegansätze (09) unter Bildung der Hohlkammern (13) einstückig miteinander verbunden sind.

5. Hohlkammerplatte nach Anspruch 4,
**dadurch gekennzeichnet,**
**dass** die Hohlkammerplatte (12) aus zwei im Wesentlichen baugleichen Plattenhälften mit jeweils einer Deckschicht (01a, 01b) und jeweils an der Innenseite der Deckschichten (01a, 01b) angeformten Stegansätzen (09) gebildet ist.

6. Hohlkammerplatte nach einem der Ansprüche 1 bis 5,
**dadurch gekennzeichnet,**
**dass** die Stege (14) eine Kreuzverrippung mit allseitig geschlossenen Hohlkammern (13) bilden, insbesondere dass die von den Stegen (14) gebildeten Hohlkammern (13) rechteckig, insbesondere quadratisch, oder wabenförmig, insbesondere mit sechs Ecken, ausgebildet sind.

7. Hohlkammerplatte nach einem der Ansprüche 1 bis 6,
**dadurch gekennzeichnet,**
**dass** sich die Wandstärke der Stege (14) von der Wandstärke zumindest einer Deckschicht (01a, 01b) unterscheidet, insbesondere dass die Wandstärke der Stege (14) kleiner als die Wandstärke zumindest einer Deckschicht (01a, 01b) ist.

8. Hohlkammerplatte nach einem der Ansprüche 1 bis 7,
**dadurch gekennzeichnet,**
**dass** die Deckschichten (01a, 01b) aus einem extrudierten Thermoplast hergestellt sind, wobei die Schmelze-Massenfließrate des Thermoplasts im Bereich von 0,20 g/10min bis 0,80 g/10min liegt.

9. Hohlkammerplatte nach einem der Ansprüche 1 bis 8,
**dadurch gekennzeichnet,**
**dass** die Deckschichten (01a, 01b) aus extrudierten, hochdichten Polyethylen, insbesondere PE-HD gemäß DIN 16925, oder aus extrudierten Polypropylen, insbesondere PP-Homopolymer gemäß DIN 16971, oder aus PP-C, PETG, PVC, E-CTFE und PVDF hergestellt sind.

10. Verfahren zur Herstellung einer Hohlkammerplatte (12),
mit folgenden Verfahrensschritten:
a) Extrusion einer oberen Deckschicht (01a) und einer unteren Deckschicht (01b) aus Kunststoff;
b) Umformung des extrudierten Kunststoffs an der Innenseite (05) von zumindest einer Deckschicht (01a, 01b) unter Bildung von einstückig an die Deckschicht (01a, 01b) angeformten Stegansätzen (09);
c) stoffschlüssige Verbindung der freien Seitenkanten (10) der einstückig angeformten Stegansätze (09) an der gegenüberliegenden Deckschicht (01a, 01b) in zumindest einer Verbindungszone (11) unter Bildung der Hohlkammern (13).

11. Verfahren nach Anspruch 10,
**dadurch gekennzeichnet,**
**dass** die Umformung des extrudierten Kunststoffs an den Innenseiten (05) der unteren und der oberen Deckschicht (01a, 01b) unter Bildung von Stegansätzen (09) an den Innenseiten (05) von beiden Deckschichten (01a, 01b) erfolgt, wobei die freien Seitenkanten (10) der gegenüberliegenden, jeweils einstückig angeformten Stegansätze (09) unter Bildung der Hohlkammern (13) einstückig miteinander verbunden werden.

12. Verfahren nach Anspruch 10 oder 11,
**dadurch gekennzeichnet,**
**dass** die extrudierten Deckschichten (01a, 01b) beim Umformen zur Bildung der Stegansätze (09) an der Innenseite (05) auf eine Temperatur oberhalb der zur Umformung des extrudierten Kunststoffes notwendigen Erweichungstemperatur erwärmt werden, wobei an der Außenseite (06) eine Temperatur unterhalb der zur Umformung des extrudierten Kunststoffes notwendigen Erweichungstemperatur erhalten bleibt.

13. Verfahren nach einem der Ansprüche 10 bis 12,
**dadurch gekennzeichnet,**
**dass** die extrudierten Deckschichten (01a, 01b) vor der Umformung zu Plattenabschnitten zugeschnitten werden, wobei die Breite der extrudierten Deckschichten (01a, 01b) der Breite der Seitenkanten der herzustellenden Hohlkammerplatten (12) entspricht, und wobei die Länge der Seitenkanten der Plattenabschnitten der Länge der Seitenkanten der herzustellenden Hohlkammerplatten (12) entspricht.

14. Verfahren nach einem der Ansprüche 10 bis 13,
**dadurch gekennzeichnet,**
**dass** die extrudierten Deckschichten (01a, 01b) zur Bildung der Stegansätze (09) mit einem Presswerkzeug (07) dessen Presselement (08) die Kontur der zu bildenden Stegansätze (09) enthält, insbesondere mit einer Plattenpresse (07) oder eine Doppelbandpresse, verpresst werden.

15. Verfahren nach einem der Ansprüche 10 bis 14,
**dadurch gekennzeichnet,**
**dass** die extrudierten Deckschichten zur Bildung der Stegansätze mit einem Kalandrierwerkzeug, das die Kontur der Stegansätze enthält, kalandriert werden.
